# EUROPEAN PATENT APPLICATION

(11) **EP 1 258 725 A1**
(43) Date of publication of application: **20.11.2002**
(21) Application number: 02006343.4
(22) Date of filing: 21.03.2002
(51) Int. Cl.: G01N 27/48

(54) **Process and Cell for voltammetric measurement**

(30) Priority: 11.05.2001 PT 10260801
(71) Applicant: Faculdade de Ciencias da Universidade do Porto, P-4099-002 Porto (PT)
(72) Inventor: Ferreira de Araujo Barros, Aquiles José, 4099-002 Porto (PT); Maia Rodrigues, José Antonio, 4099-002 Porto (PT); Ferreira De Almeida, Paulo Joaquim, 4099-002 Porto (PT); De Lima Ferreira Guido, Luis Guiherme, 4099-002 Porto (PT); Conçalves Rodrigues, Pedro Miguel, 4099-002 Porto (PT)
(74) Representative: Pelayo de Sousa Henriques, Rui

(57) **Abstract**

The objective of this invention is the development of a methodology for the voltammetric determination by reduction at high frequencies of species that can be adsorbed at a hanging mercury drop electrode, with no need for elimination of oxygen. Non-electroactive species can be determined if previously converted into electroactive species. The methodology can be applied in flow, using a voltammetric cell (733) characterized by an adaptation head (7331) with a cavity (73311) containing the entire drop (7332). Preferably, that cavity (73311) directs the flow according to a direction essentially perpendicular to the tangent to the drop at its lower point. A device is foreseen for the determination of volatile and hydrophobic compounds, which includes a pervaporation cell equipped with a hydrophobic membrane for the separation of those compounds. The methodology, the voltammetric cell and the device are specially adapted for the voltammetric determination of diacetyl in flow in the presence of oxygen.

## Description

A process is invented for the voltammetric determination by reduction at a high frequencies of species that can be adsorbed at a hanging mercury drop electrode, with no need for elimination of oxygen. Non-electroactive species can be determined if previously converted into electroactive species. The methodology can be applied in flow, using a voltammetric cell equipped with an adaptation head specially invented for that purpose.

### State of the art

The voltammetric determination of compounds in flow by reduction at drop mercury electrodes has not been possible up to the present moment due to the interference of dissolved oxygen. It is a serious limitation, as it prevents the use of this electrode in flux, although it is assuredly the most important electrode in the context of voltammetry. In fact, the voltammetric determination of compounds by reduction at mercury electrodes has been limited to batch methodologies, due to the need to pass a stream of inert gas (generally nitrogen) through the solution of the analyte to remove dissolved oxygen interference.

This drawback is very important and a lot of effort has been directed to eliminate the oxygen interference. For instance, an automated deoxygenation process connected with a flow-through cell has been proposed by Taylor (Taylor, L. R., Chemtech July 1994, 38), in which the solution containing the analyte is passed through a tube made of a semi-permeable membrane. The tube is coiled inside a chamber filled with an inert gas (nitrogen), which allows the diffusion of oxygen from the solution on its way to the measurement cell, where it arrives almost deoxygenated. Although the system represents an improvement to the state of the art, it is quite complicated and its widespread use has been very limited.

Besides the question of oxygen elimination, it was not possible to solve in a satisfactory way the problems of instability and lack of reproducibility related with the use in flow of the Hanging Mercury Drop Electrode.

### Objectives

One of the objectives of the present invention is to solve the problem of oxygen elimination with no need for any additional device, and it is applicable in the case of species that can be adsorbed at the hanging mercury drop electrode.

Another objective of the invention consists in the development of a voltammetric cell provided with an adaptation head, which allows the flow determination of reducible species that are adsorbed at the hanging mercury drop electrode; thus, there is no need of a previous elimination of oxygen and there is a simultaneous elimination of the instability and lack of reproducibility problems previously referred to.

In the context of the last objective, a flow analysis system is presented containing a pervaporation cell for the extraction of non-polar compounds, which is formed by a lower pervaporation chamber and an upper receiving chamber separated by a semi-permeable hydrophobic membrane.

### Invention description

In the present invention the declared objectives are reached by using a voltammetric process of determination by reduction at high frequencies, i.e higher than 100 Hz, with previous adsorption, using a hanging mercury drop electrode, characterised by the presence of oxygen. Besides electroactive compounds, non-electroactive compounds can also be determined if, before the determination, they are converted into electroactive compounds.

The process is implemented in the case of flow determination by using a voltammetric flow cell characterised by having an adaptation head with a cavity that contains the whole mercury drop, a situation that cumulatively allows the elimination or substantial reduction of the problems of instability and lack of reproducibility which have been a drawback to the use of mercury electrodes in flow. Voltammetric cells with preferential configurations are characterised in claims 6 and 7.

A device for the determination of hydrophobic and volatile compounds was also developed, including a pervaporation cell provided with a semi-permeable hydrophobic membrane suited to the separation of those compounds. The process, the voltammetric cell and the device are specially adapted to the voltammetric determination of diacetyl in flow in the presence of oxygen.

### Short description of figures

The present invention is represented in an illustrative but not limited way in the annexed figures, where:
Figure 1 represents, in a partial cross-section, the flow voltammetric cell itself, with a drop of mercury hanging at the lower extremity of its capillary, which belongs to the voltammetric equipment;
Figure 2 represents a cross-section of the adaptation head of the voltammetric cell;
Figures 3 and 4 represent a cut of alternative configurations of the adaptation head of the voltammetric cell;
Figure 5 (adapted to the case of determination of diacetyl) is a schematic representation of the device used in the determination of volatile and hydrophobic compounds, which includes a pervaporation cell containing a hydrophobic membrane specially suited to the separation of those compounds.

### Detailed description of the invention

The complementary description of the invention is made now with reference to the drawings mentioned, with the inclusion of their numeric references

In relation to the products, those references are:
1 - beer sample
11 - diacetyl vapour
2 - orto - phenylenediamine solution (derivatising agent)
112 - solution of derivatised diacetyl (dimethylquinoxaline)
3 - solution of sodium hydrogenophosphate, pH = 7 (eluent)
1123 - solution of dimethylquinoxaline (112) injected in the eluent (3)

In relation to the equipment, those references are:
5 - pervaporation circuit
   51- pump
   52 - heating bath
6 - pervaporation cell
   61 -pervaporation chamber
   62 - semi-permeable hydrophobic membrane
   63 - collection chamber
7 - analysis circuit
   71 - pump
   72 - injection valve
   73 - voltammetric system for flow detection
      733 - voltammetric cell
         7331 - adaptation head
            73311 - cavity of the adaptation head
            73312- connector
            73313 - channel for the withdrawal of the mercury drop
         7332 - mercury drop

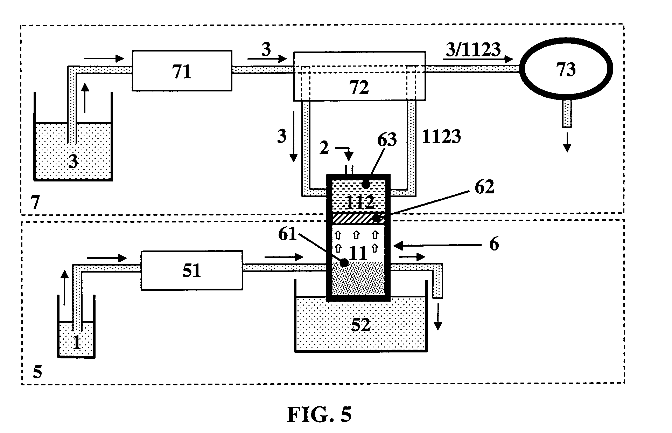

The above mentioned detailed description of the invention is illustrated for the case of the determination of diacetyl in beer, through the device represented in figure 5.

That device is composed of a pervaporation circuit (5) and an analysis circuit (7) interfaced with a pervaporation cell (6).

The pervaporation cell (6) includes a pervaporation chamber (61) and a collection chamber (63), separated by a semi-permeable hydrophobic membrane (62). The pervaporation chamber (61) is dipped in a heating bath (52), at a temperature that can be regulated according to the characteristics of the compounds being determined, which in the case of diacetyi is about 90°C.

The sample of beer (1) is forced by the pump (51) into the pervaporation chamber (61), where diacetyl vapour is formed (11) and passed through the semi-permeable hydrophobic membrane (62) into the collection chamber (63), where it reacts, in the case of diacetyl, with the derivatising agent orto-diphenylquinoxaline, with the formation of dimethylquinoxaline (112).

The more volatile compounds are vaporised in the pervaporation chamber (61), but only the hydrophobic are able to pass to the collection chamber (63) as only they can cross the hydrophobic membrane (62) - for instance, water vapor is retained in the lower chamber.

At the same time, in the above mentioned circuit of analysis (7), the pH 7 sodium hydrogenophosphate solution (3), which is the preferential eluent in the case of diacetyl analysis, is forced by the pump (71) into the flow voltammetric system (73) through the injection valve (72). The eluent can pass directly from the valve to the mentioned voltammetric system, but it can also be forced to pass through the above above mentioned collection chamber (63), taking with it dimethylquinoxaline (112); this mixture (1123) is directed to the detection system, where diacetyl is determined. The flow injection system used is a common flow injection system, with the particularity of its "*by-pass*" being the collection chamber (63) of the pervaporation cell (6). In fact, when the injection valve is closed, the eluent flows normally to the detection system; when the injection valve is open, the eluent is forced to pass through the collection chamber (63) of the pervaporation cell (6) carrying to the detector the compounds meanwhile pervaporated and possibly in a derivatised state.

Finally, the voltammetric system for detection in flow (73) is described, as it also constitutes an innovative element of the presented invention.

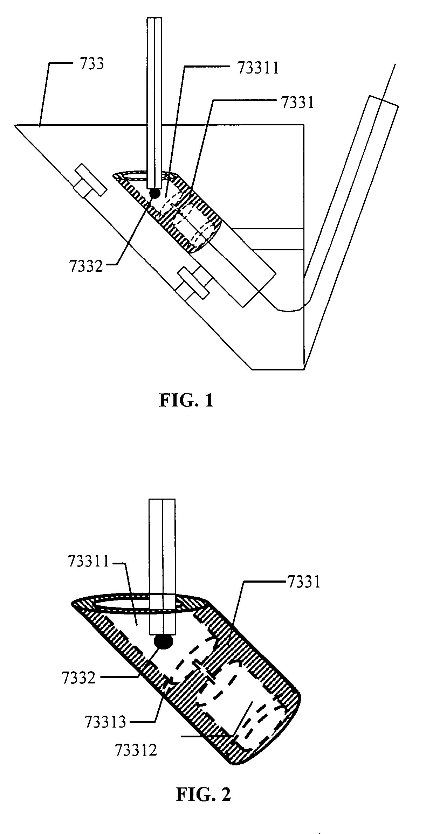

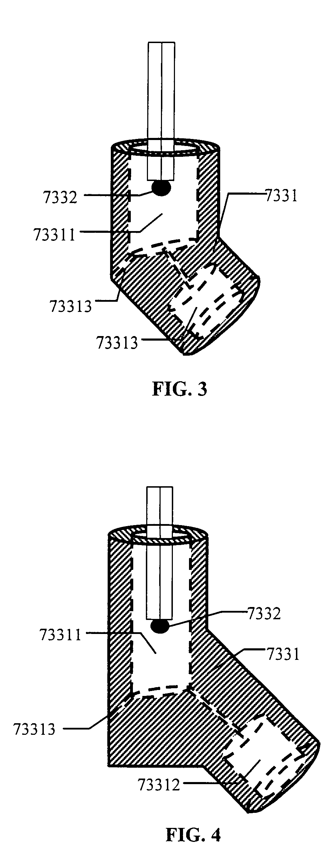

In fact, the adaptation head (7331) of the voltammetric cell (733) contains a cavity (73311) where the lower extremity of the hanging mercury drop electrode is completely dipped, as can be seen in figures 1 and 4.

This configuration allows good conditions for the stability of the drop and for the reproducibility of the results.

Accordingly, if the adsorption of species is made during a few seconds (about ten seconds in the case of derivatised diacetyl) and is followed by a voltammetric square wave potential scan, using a sufficiently high frequency (equal or higher 200 Hz in the case of derivatised diacetyl), it is possible to obtain a reduction signal for the adsorbed species which is much more intense than that of oxygen reduction, thus allowing the determination without the elimination of the latter.

## Claims

1. Process of voltammetric determination by reduction at frequencies higher than 100 Hz, with previous adsorption, using a hanging mercury dropping electrode, and **characterized by** the presence of oxygen.

2. Process according to the previous claim, **characterized by** the electroactivity of the compounds being determined or by the existence of a previous reaction of conversion of those compounds in electroactive compounds.

3. Process according to the previous claim, **characterized by** the fact that the determination is in flow.

4. Process according to the previous claim, **characterized by** the volatility and hydrophobicity of the compounds being determined.

5. Process according to the previous claim, **characterized by** the fact that diacetyl is the compound being determined.

6. Voltammetric cell in flow (733) according to claim 3, **characterized by** having an adaptation head (7331) with a cavity (73311) that confines the whole drop (7332); this cavity is preferentially ended by an opening contained in a plain parallel to the tangent to the mentioned drop (7332) at its lower point.

7. Voltammetric cell in flow (733) according to the previous claim, **characterized by** the fact that the cavity (7331) of the adapation head (7331) orientates the flow in a direction substantially perpendicular to the tangent to the drop (7332) at its lower point.

8. Device according to claim 4 and either of the claims 6 or 7, **characterized by** having a pervaporation cell (6) equipped with a semi-permeable hydrophobic membrane (62).
